# EUROPEAN PATENT APPLICATION

(11) **EP 2 769 759 A1**
(43) Date of publication of application: **27.08.2014**
(21) Application number: 12842195.5
(22) Date of filing: 17.10.2012
(51) Int. Cl.: B01D 53/14, B01D 53/34, B01D 53/52, B01D 53/62, B01D 53/77

(54) **3-COMPONENT ABSORBENT SOLUTION, AND CO2 AND/OR H2S REMOVAL DEVICE AND METHOD**

(30) Priority: 21.10.2011 JP 2011232135
(71) Applicant: Mitsubishi Heavy Industries, Ltd., Tokyo 108-8215 (JP); The Kansai Electric Power Co., Inc., Kita-ku Osaka-shi Osaka 530-8270 (JP)
(72) Inventor: HIRATA, Takuya, Tokyo 108-8215 (JP); TANAKA, Hiroshi, Tokyo 108-8215 (JP); OISHI, Tsuyoshi, Tokyo 108-8215 (JP); TATSUMI, Masahiko, Hyogo 661-0974 (JP); YAGI, Yasuyuki, Hyogo 661-0974 (JP)
(74) Representative: Casciano, Lidia Giulia Rita
(86) International application number: PCT/JP2012/076853
(87) International publication number: WO 2013/058286

(57) **Abstract**

A first amine, which is a straight chain secondary monoamine, 2) a second amine, which is a cyclic secondary polyamine as a reaction accelerator, and 3) a third amine, which is an amine consisting of one selected from a cyclic amine group constituted from a secondary or tertiary amino group or a straight chain amine group with high steric hindrance are mixed to obtain an absorbent. By the synergistic effect thereof, absorption properties to CO₂ and/or H₂S are excellent and the absorbed CO₂ or H₂S emission properties during the regeneration of the absorbent become excellent. Therefore, the water vapor amount used during the regeneration of the absorbent in CO₂ recovery equipment can be reduced.

## Description

### Field

The present invention relates to a three-component absorbent, and a device and method for removing CO₂ and/or H₂S.

### Background

In recent years, the greenhouse effect due to CO₂ has been pointed out as a cause of the global warming phenomenon, and measures to protect the global environment have been urgent on an international basis. The CO₂ source extends to every field of human activity which burns fossil fuels, and requirements to suppress the emission thereof tend to increasingly strengthen. Following this, power generating equipment such as a thermal power plant using large quantities of fossil fuels is used as a subject, and a method in which flue gas of boilers is brought into contact with an amine-type CO₂ absorbent to remove and recover CO₂ in the flue gas and a method in which the recovered CO₂ is stored without release to the atmosphere have been energetically researched. As a step of removing and recovering CO₂ from flue gas using a CO₂ absorbent as above, a step of bringing flue gas into contact with a CO₂ absorbent in an absorber and a step of, by heating the absorbent having CO₂ absorbed therein in a regenerator, releasing CO₂ and regenerating the absorbent, and reusing the solution by recirculation in the absorber are applied (see e.g. Patent Literature 1).

In the method in which CO₂ is absorbed and removed and recovered from CO₂-containing gas such as flue gas using the above CO₂ absorbent and steps, these steps are attached and installed to combustion equipment, and thus it is also required to reduce operating costs as much as possible. Among the above steps, in particular, in the regeneration step, a large amount of thermal energy is consumed, and thus a process with reduced energy is required to the extent possible.

Therefore, it has been previously proposed to attempt to reduce the amount of steam consumption by extracting a part of a semi-lean solution from a regenerator to the outside thereof, performing heat exchange with a lean solution using a heat exchanger, then performing heat exchange with steam condensate water using a heat exchanger, returning the solution to the lower side of an extracting position, and elevating the temperature of the semi-lean solution supplied to the lower side in the regenerator (e.g. see Patent Literature 2 (Example 8, FIG. 17).

On the other hand, in order to attempt to improve the performance of a CO₂ absorbent, an absorbent contributing to the improvement in absorption performance is also proposed (Patent Literature 4).

### Citation List

### Patent Literature

Patent Literature 1: Japanese Laid-open Patent Publication No. 7-51537
Patent Literature 2: Japanese Patent No. 4690659
Patent Literature 3: Japanese Laid-open Patent Publication No. 2008-13400
Patent Literature 4: Japanese Laid-open Patent Publication No. 2008-307519
Patent Literature 5: Japanese Patent No. 4634384 Summary

### Technical Problem

For a CO₂ absorbent, incidentally, not only the absorption performance thereof but also releasing ability when regenerating the absorbent is important. Until now, however, there have been many absorbents in which improvements in absorption performance are sought, and in the present circumstances, consideration of absorbents having excellent regeneration performance is limited.

Therefore, when CO₂ is recovered from exhaust gas, vapor is required as described above, and thus for the purpose of reducing operating costs, the appearance of an absorbent having not only absorption ability but also regeneration ability is strongly demanded to manifest energy-saving properties which are capable of achieving the desired CO₂ recovery amount with a low vapor amount (Patent Literature 5).

In view of the above issue, a problem of the present invention is to provide a three-component absorbent which has not only absorption ability but also regeneration ability, and a device and method for removing CO₂ and/or H₂S.

### Solution to Problem

According to a first aspect of the present invention in order to solve the above problem, there is provided a three-component absorbent for absorbing CO₂ and/or H₂S in gas, including: 1) a straight chain secondary monoamine; 2) a cyclic secondary polyamine; and 3) at least one amine selected from a cyclic amine group constituted from a secondary or tertiary amino group or a straight chain amine group with high steric hindrance, wherein three-component absorbent is dissolved in water.

According to a second aspect of the present invention, there is provided the three-component absorbent according to the first aspect, wherein a combination percentage of 1) the straight chain secondary monoamine is 30 to 55 wt%, a combination percentage of 2) the cyclic secondary polyamine is 1 to 15 wt%, and a combination percentage of 3) the at least one amine selected from a cyclic amine group constituted from a secondary or tertiary amino group or a straight chain amine group with high steric hindrance is 1 to 15 wt%, and a sum of 1) the straight chain secondary monoamine, 2) the cyclic secondary polyamine and 3) at least one amine selected from a cyclic amine group constituted from a secondary or tertiary amino group or a straight chain amine group with high steric hindrance is 70 wt% or less.

According to a third aspect of the present invention, there is provided the three-component absorbent according to the first or second aspect, wherein 1) the straight chain secondary monoamine is selected from 2-methylaminoethanol (MAE), 2-ethylaminoethanol (EAE), 2-isopropylaminoethanol (IPAE) or 2-n-butylaminoethanol (BEA).

According to a fourth aspect of the present invention, there is provided the three-component absorbent according to the first or second aspect, wherein 2) the cyclic secondary polyamine is selected from piperazine (P) or piperazine derivatives.

According to a fifth aspect of the present invention there is provided the three-component absorbent according to the first or second aspect, wherein 3) the cyclic amine constituted from a secondary or tertiary amino group is a piperazine derivative and is selected from an amine group in which the number of carbons in an exocyclic substituent is one.

According to a sixth aspect of the present invention there is provided the three-component absorbent according to the first or second aspect, wherein 3) the cyclic amine constituted from a secondary or tertiary amino group is a piperazine derivative and is selected from an amine group in which the number of carbons in an exocyclic substituent is two or more and which has high steric hindrance.

According to a seventh aspect of the present invention, there is provided the three-component absorbent according to the first or second aspect, wherein 3) the straight chain amine with high steric hindrance is selected from primary or secondary hindered amines in which a plurality of functional groups, which are any of alkyl group, hydroxy group and amino group, are bound to a carbon atom adjacent to the nitrogen atom, or tertiary amines.

According to an eighth aspect of the present invention, there is provided the three-component absorbent according to the fourth aspect, wherein 2) the cyclic secondary polyamine, which is a piperazine derivative, is selected from 1-methylpiperazine (MPZ) or 2-methylpiperazine (MP).

According to a ninth aspect of the present invention, there is provided the three-component absorbent according to the fifth aspect, wherein as an amine which is 3) the cyclic amine constituted from a secondary or tertiary amino group, which is a piperazine derivative, and in which the number of carbons in an exocyclic substituent is one, that which is different from 2) the cyclic secondary polyamine, which is a piperazine derivative, is selected from 1-methylpiperazine (MPZ) or 2-methylpiperazine (MP).

According to a tenth aspect of the present invention, there is provided the three-component absorbent according to the sixth aspect, wherein an amine with high steric hindrance, which is 3) the cyclic amine constituted from a secondary or tertiary amino group, which is a piperazine derivative, and in which the number of carbons in an exocyclic substituent is two or more, is selected from 1-(2-hydroxyethyl)piperazine (OHPIZ) or N-isopropyl aminoethyl piperazine (IAZ).

According to an eleventh aspect of the present invention, there is provided a device for removing CO₂ and/or H₂S, wherein the device for removing CO₂ and/or H₂S has an absorber which removes CO₂ and/or H₂S by bringing CO₂ and/or H₂S-containing gas into contact with an absorbent, and a regenerator which regenerates the solution having CO₂ and/or H₂S absorbed therein, and removes CO₂ and/or H₂S in the regenerator to reuse the regenerated solution in the absorber, wherein the device for removing CO₂ and/or H₂S is formed by using the three-component absorbent according to any one of the first to tenth aspects.

According to a twelfth aspect of the present invention, there is provided a method for removing CO₂ and/or H₂S by removing CO₂ and/or H₂S by bringing CO₂ and/or H₂S-containing gas into contact with an absorbent, and regenerating the solution having CO₂ and/or H₂S absorbed therein, and reusing the solution regenerated by removing CO₂ and/or H₂S in a regenerator in an absorber, wherein the CO₂ and/or H₂S removes CO₂ and/or H₂S is/are removed by using the three-component absorbent according to any one of the first to tenth aspects.

### Advantageous Effects of Invention

According to the present invention, by obtaining an absorbent by mixing a straight chain secondary monoamine, a cyclic secondary polyamine as a reaction accelerator and an amine consisting of one selected from a cyclic amine group constituted from a secondary or tertiary amino group or an amine group with high steric hindrance, the CO₂ or H₂S emission properties during the regeneration of the absorbent become excellent, and the water vapor amount used during the regeneration of the absorbent in CO₂ or H₂S recovery equipment can be reduced.

### Brief Description of Drawings

FIG. 1 is a schematic diagram illustrating the constitution of a CO₂ recovery unit involved in Example 1.
FIG. 2 is a diagram illustrating correlation between actual measured values and calculated values of heat consumption rate for CO₂ recovery.

### Description of Embodiments

The present invention will be now described in detail with reference to drawings. It should be noted that the present invention is not limited to this example and when there are several examples, an example constituted by combining the examples is also contained in the present invention. In the constituent elements in the following examples, those which can be easily assumed by those of skill in the art or those which are substantially same are also contained.

### Examples

The three-component absorbent involved in an example by the present invention is an absorbent which absorbs CO₂ and/or H₂S in gas and is obtained by mixing and dissolving 1) a straight chain secondary monoamine, 2) a cyclic secondary polyamine and 3) at least one amine selected from a cyclic amine group constituted from a secondary or tertiary amino group or a straight chain amine group with high steric hindrance in water.

In the present invention, 1) a first amine, which is a straight chain secondary monoamine, 2) a second amine, which is a cyclic secondary polyamine as a reaction accelerator, and 3) a third amine, which is an amine consisting of one selected from a cyclic amine group constituted from a secondary or tertiary amino group or a straight chain amine group with high steric hindrance are mixed to obtain an absorbent, thereby multiply interwinding these components. By the synergistic effect thereof, absorption properties to CO₂ and/or H₂S are excellent and the absorbed CO₂ or H₂S emission properties during the regeneration of the absorbent become excellent. Therefore, the water vapor amount used during the regeneration of the absorbent in CO₂ recovery equipment can be reduced.

Herein, as 1) the first amine, which is a straight chain secondary monoamine, at least one selected from amines, such as 2-methylaminoethanol (MAE), 2-ethylaminoethanol (EAE), 2-isopropylaminoethanol (IPAE) and 2-n-butylaminoethanol (BEA), which constitute a main ingredient of absorbents is used.

In addition, 2) the second amine, which is a cyclic secondary polyamine, is at least one amine selected from a group which functions as a reaction accelerator, such as piperazine (P) and piperazine derivatives.

### (The contents of claim 8)

Herein, examples of 2) the second amine, which is a piperazine derivative, can include, for example, 1-methylpiperazine (MPZ) and 2-methylpiperazine (MP).

### (The contents of claim 5)

In addition, 3) the cyclic amine constituted from a secondary or tertiary amino group is a piperazine derivative and is preferably an amine selected from an amine group in which the number of carbons in an exocyclic substituent is one.

### (The contents of claim 6)

In addition, 3) the cyclic amine constituted from a secondary or tertiary amino group is a piperazine derivative and is preferably an amine selected from an amine group in which the number of carbons in an exocyclic substituent is two or more and which has high steric hindrance.

### (The contents of claim 7)

In addition, 3) the straight chain amine with high steric hindrance is preferably an amine selected from primary or secondary hindered amines in which a plurality of functional groups, which are any of alkyl group, hydroxy group and amino group, are bound to a carbon atom adjacent to the nitrogen atom, and tertiary amines.

Herein, hindered amines can include 2-amino-2methyl-1-propanol (AMP), 2-isopropylaminoethanol (IPAE), tert-butyl ethanolamine (tBEA) and the like, and a structure in which a plurality of functional groups are bound to a carbon atom adjacent to the nitrogen atom is important to increase steric hindrance.

In addition, tertiary amines can include N-methyldiethanolamine (MDEA) and the like.

### (The contents of claim 9)

In addition, as an amine which is 3) the cyclic amine constituted from a secondary or tertiary amino group, which is a piperazine derivative, and in which the number of carbons in an exocyclic substituent is one, an amine which is different from 2) the cyclic secondary polyamine, which is a piperazine derivative, is preferably selected from 1-methylpiperazine (MPZ) and 2-methylpiperazine (MP).

### (The contents of claim 10)

In addition, an amine which is 3) the cyclic amine constituted from a secondary or tertiary amino group, which is a piperazine derivative, and in which the number of carbons in an exocyclic substituent is two or more, and which has high steric hindrance is preferably an amine selected from 1-(2-hydroxyethyl)piperazine (OHPIZ) and N-isopropyl aminoethyl piperazine (IAZ).

In the present example, 1) a straight chain secondary monoamine (e.g. 2-n-butylaminoethanol: BEA), 2) a cyclic secondary polyamine (e.g. piperazine: P) and 3) a cyclic amine constituted from a secondary amino group (1-(2-hydroxyethyl)piperazine: OHPIZ) are mixed and dissolved to obtain a three amine component absorbent. By the synergistic effect thereof, CO₂ absorption characteristics are excellent and the CO₂ emission effect becomes excellent. Therefore, heat consumption rate during CO₂ recovery can be reduced as compared to values by a monoethanolamine absorbent which is used in a conventional technique, and operating costs (vapor costs involved in the regeneration of CO₂ absorbents) in CO₂ recovery equipment can be reduced.

In addition, as the combination percentage of the first to third amines, the combination percentage of 1) a straight chain secondary monoamine is 30 to 55 wt%, the combination percentage of 2) a cyclic secondary polyamine is 1 to 15 wt%, and the combination percentage of 3) at least one amine selected from a cyclic amine group constituted from a secondary or tertiary amino group or a straight chain amine group with high steric hindrance is 1 to 15 wt%, and the sum total of "1) the straight chain secondary monoamine", "2) the cyclic secondary polyamine" and "3) at least one amine selected from a cyclic amine group constituted from a secondary or tertiary amino group or a straight chain amine group with high steric hindrance" is preferably 70 wt% or less.

When the sum total of 1) amine, 2) amine and 3) amine is within this range, an absorbent having both two abilities, CO₂ absorption ability and releasing ability, can be obtained.

Originally, the focus as a CO₂ absorbent is to attempt to improve the CO₂ absorption performance, which is an object thereof. In the present invention, however, consideration of an absorbent having a remarkable combination of not only the absorption performance but also the action and effect of releasing captured CO₂ in an absorbent regenerator after absorbing CO₂ was attempted, and by obtaining an absorbent having the above-described first amine to third amine, an absorbent having both characteristics was found.

A main cause of the excellent CO₂ emission characteristics during regeneration among both characteristics was to obtain an absorbent from the viewpoint of the following three points.

Herein, as 3) the third amine component, a cyclic amine constituted from a secondary or tertiary amino group is considered.

Piperazine and piperazine derivatives, which are excellent in terms of the CO₂ absorption velocity and the CO₂ absorption capacity, were added to a so-called conjugated amine absorbent (a first amine, which is a straight chain secondary amine, and a second amine, which is a cyclic secondary polyamine) from the viewpoint of further reducing heat consumption rate for CO₂ recovery considering the viewpoints of A) reducing the heat of reaction, B) increasing the absorption capacity and C) increasing the absorption velocity.

### A) Consideration from the viewpoint of reducing the heat of reaction

Steric hindrance was provided to a piperazine derivative by substituting the hydrogen atom bound to a nitrogen atom in the ring for an alkyl group and the like, thereby suppressing the formation of amine carbonate with a high heat of reaction, and a heat quantity required to emit CO₂ from an absorbent was reduced.

As amines contributing to the characteristics, for example, 1-methylpiperazine (MPZ) and 1-(2-hydroxyethyl)piperazine (OHPIZ) can be exemplified, but the present invention is not limited thereto.

### B) Consideration from the viewpoint of increasing the absorption capacity

The amount of reaction with CO₂ was increased by further introducing a nitrogen-containing group into a piperazine derivative, thereby decreasing an absorbent flow rate required for CO₂ recovery, and a heat quantity required to emit CO₂ from an absorbent was reduced.

As amines contributing to the characteristics, for example, N-isopropyl aminoethyl piperazine (IAZ) can be exemplified, but the present invention is not limited thereto.

### C) Consideration from the viewpoint of increasing the absorption velocity

The amount of reaction with CO₂ was increased by further improving the absorption velocity of an amine absorbent, thereby decreasing the absorbent flow rate required for CO₂ recovery, and a heat quantity required to emit CO₂ from an absorbent was reduced.

As amines contributing to the characteristics, for example, piperazine (P), 2-methylpiperazine (MP) and 1-methylpiperazine (MPZ) can be exemplified, but the present invention is not limited thereto.

Herein, as thermal energy required to emit CO₂ from an absorbent, there are the heat of reaction of an amine and CO₂ which is dependent on the emission amount of CO₂, and the latent heat of vaporization of water depending on the amount of water vapor generated from an absorbent simultaneously with the emission of CO₂. When the amount of reaction of an absorbent and CO₂ is increased, an absorbent flow rate required to obtain a fixed CO₂ recovery amount is decreased, thereby leading to a reduction in the latent heat of vaporization of water.

Next, as 3) the third amine component, an amine with high steric hindrance is considered.

Examples of amines with high steric hindrance can include hindered amines and tertiary amines.

As the reaction of an amine with high steric hindrance and CO₂, there are Reaction 1) the formation reaction of carbamate which occurs at a ratio of amine : CO₂ =2:1, and Reaction 2) the formation reaction of bicarbonate ions which occurs at a ratio of amine : CO₂ = 1 : 1.

Herein, the reaction in Reaction 1) has a problem in that the reaction velocity is fast but the heat of reaction is high.

Therefore, in an amine with high steric hindrance, the nitrogen atom of the amine which is the reaction site with CO₂ is sterically hindered, and thus the formation of carbamate is suppressed. In a sterically hindered amine, CO₂ can be emitted with low thermal energy as compared to an amine which mainly forms carbamate with a high heat of reaction.

As amines contributing to the characteristics, for example, 2-amino-2-methyl-1-propanol (AMP), 2-isopropylaminoethanol (IPAE), tert-butyl ethanolamine (tBEA) and N-methyldiethanolamine (MDEA) can be exemplified, but the present invention is not limited thereto.

In the present invention, temperature when an absorbent is brought into contact with exhaust gas containing CO₂ and the like is normally in a range of 30 to 70°C. In addition, a corrosion inhibitor, a deterioration inhibitor and the like are added to the absorbent used in the present invention as needed.

Examples of gas treated by the present invention can include coal gasification gas, synthesis gas, coke oven gas, petroleum gas, natural gas and the like, but not limited thereto. Any gas which contains acid gas such as CO₂ and H₂S can be used.

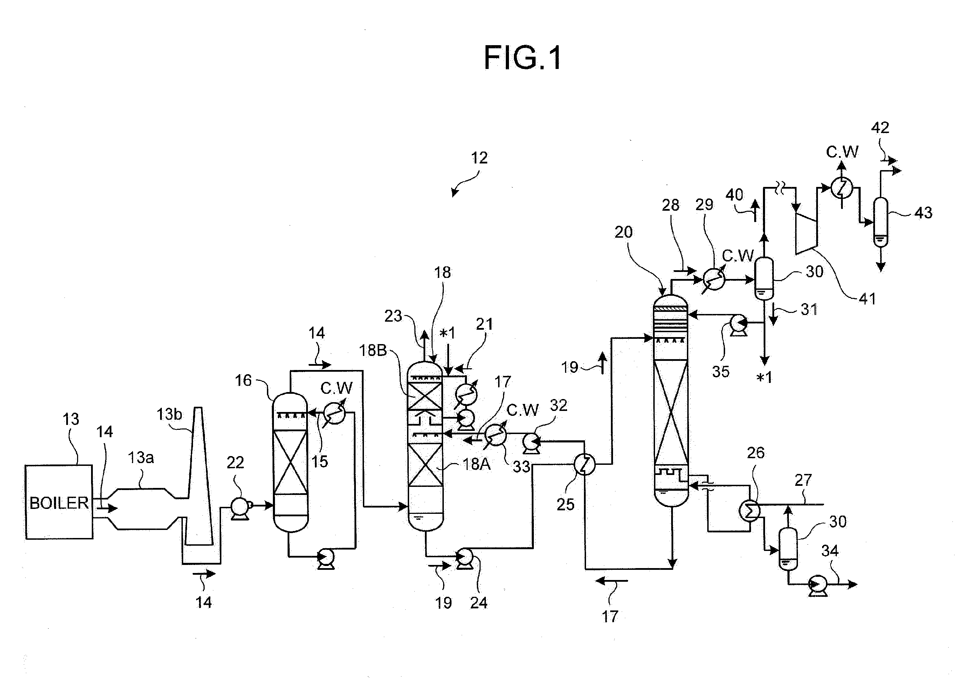

A process which can be applied in the method of the present invention for removing CO₂ and/or H₂S in gas is particularly not limited, and an example of a removal device for removing CO₂ will be described with reference to FIG. 1.

FIG. 1 is a schematic diagram illustrating the constitution of a CO₂ recovery unit involved in Example 1. As illustrated in FIG. 1, a CO₂ recovery unit 12 involved in Example 1 has an exhaust gas cooling unit 16 which cools exhaust gas 14 containing CO₂ and O₂ emitted from industrial combustion equipment 13 such as a boiler and a gas turbine with coolant 15, a CO₂ absorber 18 which has a CO₂ recovery part 18A removing CO₂ from the exhaust gas 14 by bringing the exhaust gas 14 containing cooled CO₂ into contact with a CO₂ absorbent which absorbs CO₂ (hereinafter also referred to as "absorbent") 17, and an absorbent regenerator 20 which regenerates the CO₂ absorbent by releasing CO₂ from a CO₂ absorbent having CO₂ absorbed therein (hereinafter also referred to as "rich solution") 19. In this CO₂ recovery unit 12, the regenerated CO₂ absorbent (hereinafter also referred to as "lean solution") 17 in which CO₂ is removed in the absorbent regenerator 20 is reused as the CO₂ absorbent in the CO₂ absorber 18.

In FIG. 1, the sign 13a is a gas flue, 13b is a funnel, and 34 is steam condensate water. There are a case in which the above CO₂ recovery unit is retrofitted to recover CO₂ from an already-existing exhaust gas source and a case in which the device is equipped simultaneously with a newly equipped exhaust gas source. The openable and closable door is placed in the funnel 13b and closed during operation of the CO₂ recovery unit 12. When the exhaust gas source is operated but the operation of the CO₂ recovery unit 12 is stopped, the door is set to open.

In a CO₂ recovery method using this CO₂ recovery unit 12, first, the exhaust gas 14 containing CO₂ from the industrial combustion equipment 13 such as a boiler and a gas turbine is pressurized by an exhaust gas ventilator 22, then sent to the exhaust gas cooling unit 16, cooled by the coolant 15 herein and sent to the CO₂ absorber 18.

In the above CO₂ absorber 18, the exhaust gas 14 is countercurrently brought into contact with the CO₂ absorbent 17, which is an amine absorbent involved in the present example, and CO₂ in the exhaust gas 14 is absorbed in the CO₂ absorbent 17 by chemical reaction.

By vapor-liquid contact of the CO₂-removed exhaust gas after removing CO₂ in the CO₂ recovery part 18A with circulating washing water 21 containing the CO₂ absorbent supplied from the nozzle in a washing part 18B in the CO₂ absorber 18, the CO₂ absorbent 17 which entrains the CO₂-removed exhaust gas is recovered, and then exhaust gas in which CO₂ is removed 23 is released outside the system.

In addition, a rich solution, which is the CO₂ absorbent 19 having CO₂ absorbed therein, is pressurized with a rich solution pump 24, and is heated by a lean solution, which is the CO₂ absorbent 17 regenerated in the absorbent regenerator 20, in a rich and lean solution heat exchanger 25, and is supplied to the absorbent regenerator 20.

The rich solution 19 released from the upper part of the absorbent regenerator 20 to the inside thereof causes endothermic reaction by water vapor supplied from the bottom to release most of CO₂. The CO₂ absorbent, in which a part or most of CO₂ is released in the absorbent regenerator 20, is called a semi-lean solution. When this semi-lean solution reaches to the bottom of the absorbent regenerator 20, the CO₂ absorbent (lean solution) 17 in which almost all of CO₂ is removed is obtained. A part of this lean solution 17 is overheated by water vapor 27 in a regenerative superheater 26 to supply water vapor to the inside of the absorbent regenerator 20.

On the other hand, from the head of the absorbent regenerator 20, CO₂ entraining gas 28 which entrains water vapor released from the rich solution 19 and semi-lean solution in the tower is delivered, and water vapor is condensed by a condenser 29. Water is separated in a separation drum 30, and CO₂ gas 40 is released to the outside of the system and separately compressed by a compressor 41 and recovered. This compressed and recovered CO₂ gas 42 passes through a separation drum 43, and is then pressed into an oil field using Enhanced Oil Recovery (EOR) or stored in an aquifer for global warming countermeasures.

A reflux water 31 separated and refluxed from the CO₂ entraining gas 28 which entrains water vapor in the separation drum 30 is separately supplied to the upper part of the absorbent regenerator 20 and the circulating washing water 21 sides using a reflux water-circulating pump 35.

The regenerated CO₂ absorbent (lean solution) 17 is cooled by the rich solution 19 using the rich and lean solution heat exchanger 25, then pressurized by a lean solution pump 32, further cooled by a lean solution cooler 33, and then supplied to the inside of the CO₂ absorber 18. It should be noted that in this embodiment, only the outline thereof is described and the explanation of additional apparatus is partially omitted.

Favorable test examples showing the effects of the present invention will be now described. It should be noted, however, that the present invention is not limited thereto.

### [Comparative test]

Using an absorber which is not illustrated in the diagram, CO₂ was absorbed. The absorbent compositions of the present test examples were shown in Tables 1 to 3.

### <Comparative Examples 1 to 5>

Herein, only monoethanolamine (MEA) which has been previously used was used for Comparative Example 1.

In Comparative Example 2, 2-n-butylaminoethanol (BEA) and piperazine (P) were dissolved and mixed in water by the combination in Table 2 (BEA (45 wt%) and P (5 wt%)) to obtain an absorbent.

In Comparative Example 3, 2-n-butylaminoethanol (BEA) and piperazine (P) were dissolved and mixed in water by the combination in Table 2 (BEA (45 wt%) and P (10 wt%)) to obtain an absorbent.

In Comparative Example 4, 2-methylaminoethanol (MAE) and piperazine (P) were dissolved and mixed in water by the combination in Table 3 (MAE (40 wt%) and P (5 wt%)) to obtain an absorbent.

In Comparative Example 5, 2-methylaminoethanol (MAE) and piperazine (P) were dissolved and mixed in water by the combination in Table 3 (MAE (50 wt%) and P (5 wt%)) to obtain an absorbent.

### <Test Examples 1 to 7>

On the other hand, in Test Example 1, 2-n-butylaminoethanol (BEA), piperazine (P) and 1-(2-hydroxyethyl)piperazine (OHPIZ) were dissolved and mixed in water by the combination in Table 1 (BEA (35 wt%), P (10 wt%) and OHPIZ (10 wt%)) to obtain an absorbent.

In Test Example 2, 2-n-butylaminoethanol (BEA), piperazine (P) and 1-(2-hydroxyethyl)piperazine (OHPIZ) were dissolved and mixed in water by the combination in Table 1 (BEA (40 wt%), P (5 wt%) and OHPIZ (10 wt%)) to obtain an absorbent.

In Test Example 3, 2-n-butylaminoethanol (BEA), piperazine (P) and 2-amino-2methyl-1-propanol (AMP) were dissolved and mixed in water by the combination in Table 1 (BEA (40 wt%), P (9 wt%) and AMP (6 wt%)) to obtain an absorbent.

In Test Example 4, 2-n-butylaminoethanol (BEA), piperazine (P) and N-isopropyl aminoethyl piperazine (IAZ) were dissolved and mixed in water by the combination in Table 1 (BEA (45 wt%), P (5 wt%) and IAZ (5 wt%)) to obtain an absorbent.

In Test Example 5, 2-n-butylaminoethanol (BEA), 2-methylpiperazine (MP) and N-isopropyl aminoethyl piperazine (IAZ) were dissolved and mixed in water by the combination in Table 1 (BEA (40 wt%), MP (10 wt%) and IAZ (5 wt%)) to obtain an absorbent.

In Test Example 6, 2-n-butylaminoethanol (BEA), piperazine (P) and N-methyldiethanolamine (MDEA) were dissolved and mixed in water by the combination in Table 1 (BEA (45 wt%), P (5 wt%) and MDEA (5 wt%)) to obtain an absorbent.

In Test Example 7, 2-n-butylaminoethanol (BEA), piperazine (P) and 2-methylpiperazine (MP) were dissolved and mixed in water by the combination in Table 1 (BEA (45 wt%), P (5 wt%) and MP (5 wt%)) to obtain an absorbent.

### <Test Example 8>

In Test Example 8, 2-n-butylaminoethanol (BEA), piperazine (P) and N-isopropyl aminoethyl piperazine (IAZ) were dissolved and mixed in water by the combination in Table 2 (BEA (45 wt%), P (5 wt%) and IAZ (5 wt%)) to obtain an absorbent.

### <Test Example 9>

In Test Example 9, 2-methylaminoethanol (MAE), piperazine (P) and 2-amino-2methyl-1-propanol (AMP) were dissolved and mixed in water by the combination in Table 3 (MAE (40 wt%), P (5 wt%) and AMP (10 wt%)) to obtain an absorbent.

### <Test Example 10>

In Test Example 10, 2-methylaminoethanol (MAE), piperazine (P) and 2-isopropylaminoethanol (IPAE) were dissolved and mixed in water by the combination in Table 3 (MAE (40 wt%), P (5 wt%) and IPEA (10 wt%)) to obtain an absorbent.

### <Test Example 11>

In Test Example 11, 2-methylaminoethanol (MAE), piperazine (P) and tert-butyl ethanolamine (tBEA) were dissolved and mixed in water by the combination in Table 3 (MAE (40 wt%), P (5 wt%) and tBEA (10 wt%)) to obtain an absorbent.

The heat consumption rate for CO₂ recovery, which is thermal energy required per unit of CO₂ recovery amount, was evaluated using a test device by which CO₂ can be continuously recovered and regenerated. The gas temperature of the test was 46°C, and CO₂-containing gas was carried at 5.8 Nm3 (dry)/h. The gas composition was CO₂: 10% (dry).

The results are shown in Tables 1 to 3.

**Table 1**

| | Absorbent | Heat consumption rate for CO₂ recovery (kcal/kgCO₂) | |
|---|---|---|---|
| | | Experimental value | Calculated value |
| Comparative Example 1 | Comparison target Monoethanolamine (MEA) | 885 | 925 |
| Test Example 1 | BEA 35 wt% + P 10 wt% + OHPIZ 10 wt% | 668 | 665 |
| Test Example 2 | BEA 40 wt% + P 5 wt% + OHPIZ 10 wt% | 672 | 685 |
| Test Example 3 | BEA 40 wt% + P 9 wt% + AMP 6 wt% | 690 | 627 |
| Test Example 4 | BEA 45 wt% + P 5 wt% + IAZ 5 wt% | - | 599 |
| Test Example 5 | BEA 40 wt% + MP 10 wt% + IAZ 5 wt% | - | 599 |
| Test Example 6 | BEA 45 wt% + P 5 wt% + MDEA 5 wt% | - | 635 |
| Test Example 7 | BEA 45 wt% + P 5 wt% + MP 5 wt% | - | 628 |

**Table 2**

| | Absorbent | Heat consumption rate for CO₂ recovery (kcal/kgCO₂) | |
|---|---|---|---|
| | | Experimental value | Calculated value |
| Comparative Example 2 | Comparison target BEA 45 wt% + P 5 wt% | - | 626 |
| Comparative Example 3 | Comparison target BEA 45 wt% + P 10 wt% | - | 630 |
| Test Example 8 | BEA 45 wt% + P 5 wt% + IAZ 5 wt% | - | 599 |

**Table 3**

| | Absorbent | Heat consumption rate for CO₂ recovery (kcal/kgCO₂) | |
|---|---|---|---|
| | | Experimental value | Calculated value |
| Comparative Example 4 | Comparison target MAE 40 wt% + P 5 wt% | - | 759 |
| Comparative Example 5 | Comparison target MAE 50 wt% + P 5 wt% | - | 753 |
| Test Example 9 | MAE 40 wt% + P 5 wt% + AMP 10 wt% | - | 723 |
| Test Example 10 | MAE 40 wt% + P 5 wt% + IPAE 10 wt% | - | 719 |
| Test Example 11 | MAE 40 wt% + P 5 wt% + tBEA 10 wt% | - | 721 |

As shown in Table 1, in Test Examples 1 to 7 involved in the present invention, heat consumption rate for CO₂ recovery (kcal/kg-CO₂) could be reduced 20% or more as compared to that of the absorbent of Comparative Example 1.

As shown in Table 2, in Test Example 8 involved in the present invention, heat consumption rate for CO₂ recovery (kcal/kg-CO₂) could be reduced about 5% as compared to that of the absorbents of Comparative Examples 2 and 3.

Herein, the absorbent of Comparative Example 2 is that in which a third amine, which is 3) a cyclic amine constituted from a secondary or tertiary amino group, is not added to the combination of the absorbent of Test Example 8.

On the other hand, in the absorbent of Test Example 8, heat consumption rate for CO₂ recovery (kcal/kg-CO₂) is reduced as compared to that of the absorbent of Comparative Example 2, which shows that the effect of reducing heat consumption rate for CO₂ recovery (kcal/kg-CO₂) is manifested by adding a third amine, which is 3) a cyclic amine constituted from a secondary or tertiary amino group.

In addition, the absorbent of Comparative Example 3 is that in which a third amine, which is 3) a cyclic amine constituted from a secondary or tertiary amino group, is not added to the combination of the absorbent of Test Example 8, but the total amine concentration of the absorbent is 55 wt%, which is equal to that of the absorbent of Test Example 8.

On the other hand, in the absorbent of Test Example 8, heat consumption rate for CO₂ recovery (kcal/kg-CO₂) is reduced as compared to that of the absorbent of Comparative Example 3, which shows that the effect of reducing heat consumption rate for CO₂ recovery (kcal/kg-CO₂) is manifested by properly selecting and adding a third amine, which is a cyclic amine constituted from a secondary or tertiary amino group, as compared to when simply adding 2) a cyclic secondary polyamine at a high concentration.

As shown in Table 3, in the Test Examples 9, 10 and 11 involved in the present invention, heat consumption rate for CO₂ recovery (kcal/kg-CO₂) could be reduced about 5% as compared to that of the absorbent of Comparative Examples 4 and 5.

Herein, the absorbent of Comparative Example 4 is that in which a third amine, which is 3) an amine with high steric hindrance, is not added to the combination of the absorbent of Test Example 9.

On the other hand, in the absorbents of Test Examples 9, 10 and 11, heat consumption rate for CO₂ recovery (kcal/kg-CO₂) is reduced as compared to that of the absorbent of Comparative Example 4, which shows that the effect of reducing heat consumption rate for CO₂ recovery (kcal/kg-CO₂) is manifested by adding a third amine, which is 3) an amine with high steric hindrance.

In addition, the absorbent of Comparative Example 5 is that in which a third amine, which is 3) an amine with high steric hindrance, is not added to the combination of the absorbents of Test Examples 9, 10 and 11, but the total amine concentration of the absorbent is 55 wt%, which is equal to that of the absorbent of Test Example 8.

On the other hand, in the absorbent of Test Example 9, heat consumption rate for CO₂ recovery (kcal/kg-CO₂) is reduced as compared to that of the absorbent of Comparative Example 5, which shows that the effect of reducing heat consumption rate for CO₂ recovery (kcal/kg-CO₂) is manifested by properly selecting and adding a third amine, which is 3) an amine with high steric hindrance, as compared to when simply adding a straight chain secondary monoamine at a high concentration.

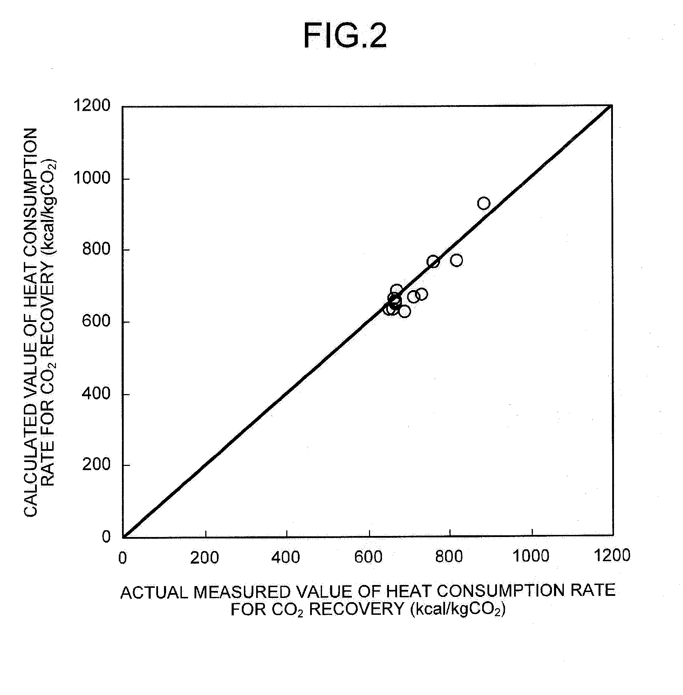

FIG. 2 is a diagram illustrating correlation between actual measured values and calculated values of heat consumption rate for CO₂ recovery.

Herein, calculated values are used in Test Examples 4 to 11 and Comparative Examples 2 to 5. As illustrated in FIG. 2, however, actual measured values and calculated values have excellent correlation, and thus the effect of the present invention can be presumed due to differences in calculated values.

### Reference Signs List

- 12: CO₂ RECOVERY UNIT
- 13: INDUSTRIAL COMBUSTION EQUIPMENT
- 14: EXHAUST GAS
- 16: EXHAUST GAS COOLING UNIT
- 17: CO₂ ABSORBENT (LEAN SOLUTION)
- 18: CO₂ ABSORBER
- 19: CO₂ ABSORBENT HAVING CO₂ ABSORBED THEREIN (RICH SOLUTION)
- 20: ABSORBENT REGENERATOR
- 21: WASHING WATER

## Claims

1. A three-component absorbent for absorbing CO₂ and/or H₂S in gas, comprising:
1) a straight chain secondary monoamine;
2) a cyclic secondary polyamine; and
3) at least one amine selected from a cyclic amine group constituted from a secondary or tertiary amino group or a straight chain amine group with high steric hindrance, wherein the three-component absorbent is dissolved in water.

2. The three-component absorbent according to claim 1, wherein
a combination percentage of 1) the straight chain secondary monoamine is 30 to 55 wt%,
a combination percentage of 2) the cyclic secondary polyamine is 1 to 15 wt%, and
a combination percentage of 3) the at least one amine selected from a cyclic amine group constituted from a secondary or tertiary amino group or a straight chain amine group with high steric hindrance is 1 to 15 wt%, and
a sum of 1) the straight chain secondary monoamine, 2) the cyclic secondary polyamine and 3) the at least one amine selected from a cyclic amine group constituted from a secondary or tertiary amino group or a straight chain amine group with high steric hindrance is 70 wt% or less.

3. The three-component absorbent according to claim 1 or 2, wherein
1) the straight chain secondary monoamine is selected from 2-methylaminoethanol, 2-ethylaminoethanol, 2-isopropylaminoethanol and 2-n-butylaminoethanol.

4. The three-component absorbent according to claim 1 or 2, wherein
2) the cyclic secondary polyamine is selected from piperazine and piperazine derivatives.

5. The three-component absorbent according to claim 1 or 2, wherein
3) the cyclic amine constituted from a secondary or tertiary amino group is a piperazine derivative and is selected from an amine group in which the number of carbons in an exocyclic substituent is one.

6. The three-component absorbent according to claim 1 or 2, wherein
3) the cyclic amine constituted from a secondary or tertiary amino group is a piperazine derivative and is selected from an amine group in which the number of carbons in an exocyclic substituent is two or more and which has high steric hindrance.

7. The three-component absorbent according to claim 1 or 2, wherein
3) the straight chain amine with high steric hindrance is selected from primary or secondary hindered amines in which a plurality of functional groups, which are any of alkyl group, hydroxy group and amino group, are bound to a carbon atom adjacent to the nitrogen atom, and tertiary amines.

8. The three-component absorbent according to claim 4, wherein
2) the cyclic secondary polyamine, which is a piperazine derivative, is selected from 1-methylpiperazine and 2-methylpiperazine.

9. The three-component absorbent according to claim 5,
as an amine which is 3) the cyclic amine constituted from a secondary or tertiary amino group, which is a piperazine derivative, and in which the number of carbons in an exocyclic substituent is one, that which is different from 2) the cyclic secondary polyamine, which is a piperazine derivative, is selected from 1-methylpiperazine and 2-methylpiperazine.

10. The three-component absorbent according to claim 6, wherein
an amine which is 3) the cyclic amine constituted from a secondary or tertiary amino group, which is a piperazine derivative, and in which the number of carbons in an exocyclic substituent is two or more, and which has high steric hindrance is selected from 1-(2-hydroxyethyl)piperazine and N-isopropyl aminoethyl piperazine.

11. A device for removing CO₂ and/or H₂S, wherein the device for removing CO₂ and/or H₂S has an absorber which removes CO₂ and/or H₂S by bringing CO₂ and/or H₂S-containing gas into contact with an absorbent, and a regenerator which regenerates the solution having CO₂ and/or H₂S absorbed therein, and removes CO₂ and/or H₂S in the regenerator to reuse the regenerated solution in the absorber,
wherein the device for removing CO₂ and/or H₂S is formed by using the three-component absorbent according to any one of claims 1 to 10.

12. A method for removing CO₂ and/or H₂S by removing CO₂ and/or H₂S by bringing CO₂ and/or H₂S-containing gas into contact with an absorbent, and regenerating the solution having CO₂ and/or H₂S absorbed therein, and reusing the solution regenerated by removing CO₂ and/or H₂S in a regenerator in an absorber,
wherein the CO₂ and/or H₂S removes CO₂ and/or H₂S is/are removed by using the three-component absorbent according to any one of claims 1 to 10.
